Europäisches Patentamt

European Patent Office

Office européen des brevets

(11) Veröffentlichungsnummer: **0 482 244 A1**

## EUROPÄISCHE PATENTANMELDUNG

(21) Anmeldenummer: **90120530.2**

(51) Int. Cl.5: **H02K 5/167, A47J 43/08**

(22) Anmeldetag: **26.10.90**

(43) Veröffentlichungstag der Anmeldung:
**29.04.92 Patentblatt 92/18**

(84) Benannte Vertragsstaaten:
**FR IT**

(71) Anmelder: **Robert Krups GmbH & Co. KG**
**Heresbachstrasse 29**
**W-5650 Solingen 19(DE)**

(72) Erfinder: **Walsh, Colm**
**Ashville, Ballysheedy Co.**
**Limerick(IE)**

(74) Vertreter: **Buse, Karl Georg, Dipl.-Phys. et al**
**Patentanwälte Dipl.-Phys. Buse Dipl.-Phys.**
**Mentzel Dipl.-Ing. Ludewig Unterdörnen 114**
**W-5600 Wuppertal 2(DE)**

(54) **Rahmen für Elektromotoren zum Antrieb von insbesondere Haushaltsgeräten.**

(57) Der Rahmen für Elektromotoren zum Antrieb von Haushaltsgeräten, wie Rührgeräte, Elektromesser u.dgl. weist zwei Seitenträger auf, die stirnseitig durch Brücken miteinander verbunden sind. Diese Brücken dienen der Lagerung der Motorwelle, wobei eine der beiden Brücken auch die Abtriebsmittel lagert. Dabei sind die Lagerstellen durch Haltemittel zu fixieren. Dies erfordert zusätzliche Haltemittel und aufwendige Montagevorgänge. Zur Beseitigung dieser Nachteile ist der Motorrahmen (16) aus zwei miteinander verbundenen Halbschalen (17) gebildet, die in ihrem mittleren Bereich eine Aussparung zum Durchtritt eines Stators (19), eines Rotors (11) mit Kollektor (12) und eines Lüfterrades (13) sowie Lagerstellen (14, 15) für Motorwelle (10) und Abtriebsmittel (34) aufweisen. Ein solcher aus auf Umschlag miteinander verbundenen Halbschalen gebildeter Motorrahmen erfordert keine zusätzlichen Haltemittel, wobei die eigentlichen Motorbauteile auf einfachste Weise montiert werden können.

FIG. 1

Die Erfindung bezieht sich auf einen Rahmen für Elektromotoren zum Antrieb von insbesondere Haushaltgeräten, wie Rührgeräte, Elektromesser u.dgl., dessen Seitenträger stirnseitig durch Brükken miteinander verbunden sind, die beide der Lagerung der Motorwelle dienen, wobei eine Brükke außerdem auch die Antriebsmittel lagert.

Bei einem bekannten Elektromotor der vorgenannten Art, der bei einem Mix- und Rührgerät eingesetzt ist, besteht der die Motorwelle und den Stator sowie die Abtriebsmittel aufnehmende Motorrahmen aus Leichtmetalldruckguß, wobei die Lager der Motorwelle und auch der Stator durch Stahlfederbügel am Motorrahmen festgelegt werden. Die bei einem Rührgerät beispielsweise als Schneckentrieb ausgebildeten Abtriebsmittel in Form von Schneckenrädern müssen zur axialen Lagesicherung von zusätzlichen Sicherungsmitteln, wie beispielsweise Spannringen od.dgl., gehalten werden. Abgesehen davon, daß derartige Motorrahmen selbst aufwendige Bauteile darstellen, erfordert die Festlegung der eigentlichen Motorbauteile und Abtriebsmittel am Motorrahmen, abgesehen von zusätzlichen Bauelementen zur Lagesicherung, aufwendige Montagevorgänge.

Die Aufgabe der vorliegenden Erfindung besteht darin, einen Motorrahmen für Elektromotoren der eingangs genannten Art zu schaffen, durch den die eigentlichen Motorbauteile und auch die Abtriebsmittel ohne besondere Befestigungselemente mit hoher Genauigkeit und einfachstem Montageaufwand am Motorrahmen gehaltert werden können. Diese Aufgabe ist erfindungsgemäß dadurch gelöst, daß der Motorrahmen aus zwei miteinander verbundenen Halbschalen gebildet ist, die in ihrem mittleren Bereich eine Aussparung zum Durchtritt eines Stators, eines Rotors mit Kollektor und eines Lüfterrades sowie Lagerstellen für Motorwelle und Abtriebsmittel aufweisen. Durch den aus Formteile bildenden Halbschalen zusammengesetzten Motorrahmen läßt sich dieser mit allen Funktionsteilen eines Elektromotors und der zugehörigen, ein Getriebe bildenden Abtriebseinheit zu einer integrierten Baueinheit vereinigen. Die Art des verwendeten Stators ist dabei nicht ausschlaggebend, da die Halbschalen an den jeweils verwendeten Stator angepaßt werden können. Außerdem lassen sich auch die Halbschalen an die Bauweise der verwendeten Getriebeart (Stirnradgetriebe, Kegelradgetriebe, Schneckengetriebe, Schubkurbelgetriebe u.a.) und andere Funktionseinheiten, wie beispielsweise die Werkzeugauswerfeinrichtungen bei Rührgeräten und Elektromessern, anpassen. Die Halbschalen lassen sich aus verschiedensten Werkstoffen fertigen, so daß insbesondere auch bei Motorrahmen aus nicht leitenden Werkstoffen (Kunststoffe) die Halbschalen auch als Trägerteil der elektrischen Leiterbahnen, der Steuer- und Regeleinheiten sowie der Entstörmittel verwendet werden können.

Eine stabile und wirtschaftliche Ausführungsform eines Motorrahmens läßt sich erzielen, indem jede Halbschale aus einem Blechzuschnitt napfförmig gepreßt ist und an einem umlaufenden Rand Verbindungsmittel aufweist. Im Bereich der Stirnseiten weist jede Halbschale eine flächige Brücke auf, die sich zur Halterung und Festlegung von Motorbauteilen eignet. So sind vorteilhaft die Lagerstellen für die Motorwelle aus im Bereich beider Stirnseiten der Aussparung in die Brücken einwärts geprägten Blechstreifen mit angeformter Kugelkalotte zur Aufnahme von die Motorwelle lagernden Kugelbuchsen gebildet, während die Lagerstellen für die Antriebsmittel von an wenigstens einer Brücke angeformten Lagerkragen gebildet sind.

Zur Vereinigung der Lagerschalen zu einem Motorrahmen sind nach einem weiteren Ausgestaltungsmerkmal der Erfindung auf der einen Längsseite im Rand jeder Halbschale im Längsabstand zueinander angeordnete Niethülsen angeformt, die in auf der anderen Längsseite im Rand jeder Halbschale im gleichen Längsabstand zueinander angeordnete Löcher passen. Dabei ist vorteilhaft, jede Halbschale gleichgestaltet, wodurch zwei Halbschalen auf Umschlag zusammengefügt den gehäuseartigen Motorrahmen ergeben. Durch diese Zusammenfügung zweier Halbschalen zum Motorrahmen lassen sich die Motorbauteile mit dem Motorrahmen integrieren.

Die Festlegung von Bürstenhaltern für den Kollektor läßt sich auf einfache Weise dadurch bewerkstelligen, daß jede Halbschale neben und beiderseits des Kollektors Durchbrüche zur Aufnahme der Fixierzapfen von Bürstenhaltern aufweist. Dabei sind in den Halbschalen vorzugsweise jeweils zwei Randausschnitte neben dem Kollektor angeordnet, die den Austritt des Klemmschuhs jeden Bürstenhalters aus dem Motorrahmen ermöglichen.

Auch die Halterung eines Axialkräfte der Motorwelle aufnehmenden Axialdrucklagers läßt sich auf einfache Weise verwirklichen, indem die Halbschalen auf einer Stirnseite an ihrem Rand eine Ausnehmung aufweisen, die sich im zusammengefügten Zustand der Halbschale zu einem Durchbruch ergänzen, welcher der Halterung eines die Motorwelle abstützenden Axialdrucklagers dient. Dabei kann im einfachsten Fall das Axialdrucklager aus einer Kunststoffscheibe bestehen, gegen die sich die Motorwelle abstützen kann.

Zur Abstützung des die Motorbauteile tragenden Motorrahmens in einem Gerätegehäuse weist der Rand jeder Halbschale auf ihren Längsseiten Ausschnitte zur Fixierung von auf den Rand des Motorrahmens aufgesetzten Distanzpuffern auf.

Der Erfindungsgegenstand ist in einem Ausführungsbeispiel aus den Zeichnungen ersichtlich und wird nachfolgend näher erläutert. Es zeigen:

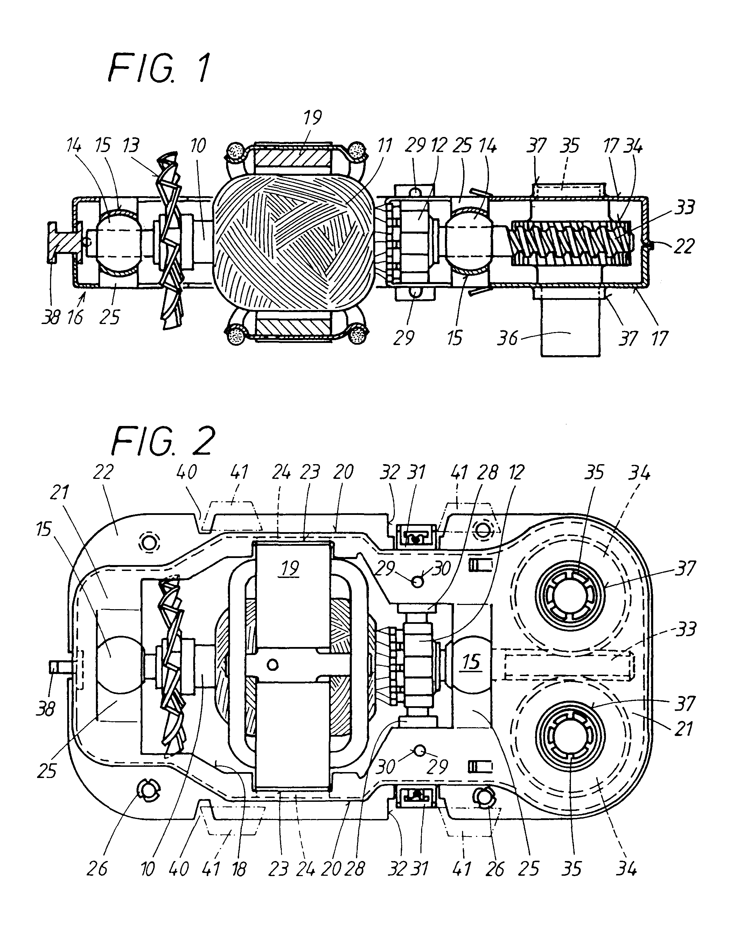

Fig. 1 den die Motorbauteile aufnehmenden und aus Halbschalen gebildeten Motorrahmen in einem Längsschnitt,

Fig. 2 den aus Fig. 1 ersichtlichen, den Motorrahmen umfassenden Elektromotor in einer Draufsicht,

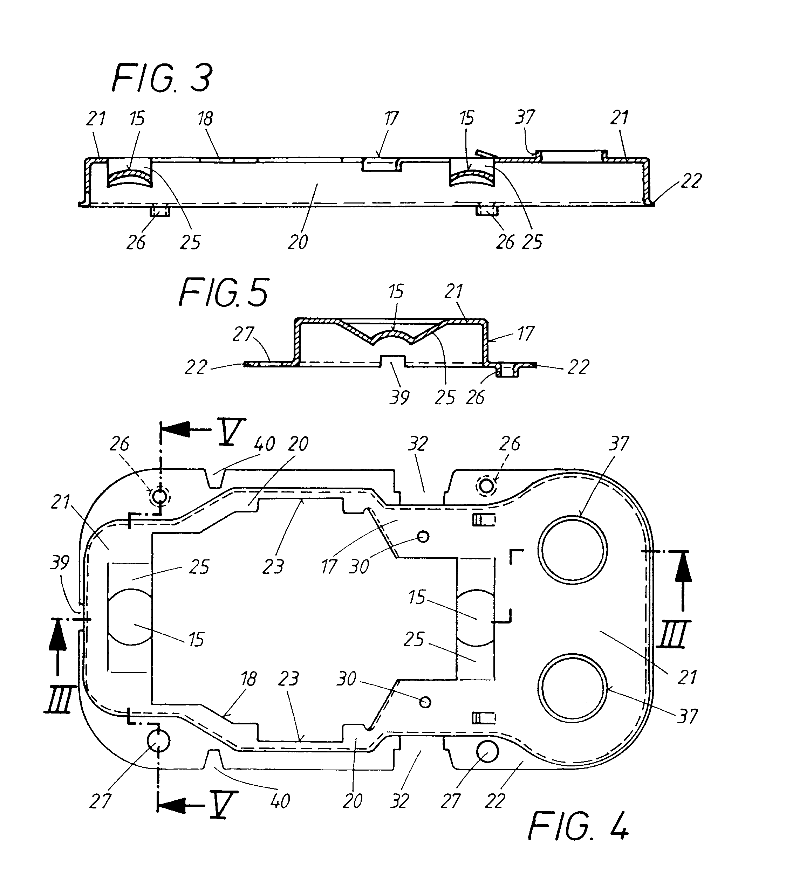

Fig. 3 eine der beiden gleichgestalteten Halbschalen in einem Längsschnitt nach der Linie III - III von Fig. 4,

Fig. 4 die aus Fig. 3 ersichtliche Halbschale in einer Draufsicht,

Fig. 5 die aus den Fig. 3 und 4 ersichtliche Halbschale in einem Querschnitt nach der Linie V - V von Fig. 4.

Auf einer Motorwelle 10 ist ein Rotor 11 zusammen mit einem Kollektor 12 und einem Lüfterrad 13 drehfest angeordnet. Diese Motorwelle 10 ist vor und hinter dem Rotor 11 in Kugelbuchsen 14 gelagert, die ihrerseits in Kugelkalotten 15 eines Motorrahmens 16 abgestützt sind. Dieser Motorrahmen 16 besteht aus zwei gleichen Halbschalen 17, wovon jede napfartig ausgebildet ist und in ihrem mittleren Bereich eine Aussparung 18, insbesondere zum Durchtritt des Lüfterrades 13 sowie des Rotors 11 und des diesen umfassenden Stators 19 aufweist. Sowohl jeder Seitenträger 20 als auch jede diese stirnseitig verbindende Brücke 21 jeder Halbschale 17 ist Z-förmig profiliert, wodurch jede Halbschale einen umlaufenden Rand 22 aufweist, wobei diese Ränder zweier zusammengefügter Halbschalen 17 aneinanderliegen, so daß der Motorrahmen einen Hohlraum aufweist, der außer im Bereich der Aussparung 18 von den aneinanderliegenden Halbschalen 17 U-förmig umschlossen ist. In diesen U-förmigen Querschnitt der zusammengefügten Halbschalen 17 greift der Stator mit an seinem Außenumfang angeordneten Vorsprüngen 24 schließend ein und ist in axialer Richtung durch Ausnehmungen 23 gesichert. Diese Ausnehmungen 23 befinden sich jeweils in den den Hohlraum des Motorrahmens übergreifenden Schenkeln der Seitenträger 20.

Die Lagerstellen für die Motorwelle 10 bildenden Kugelkalotten 15 sind Bestandteile von an den Stirnseiten der Aussparung 18 in den Brücken 21 befindlichen,einwärts geprägten Seitenlamellen 25.

Die Festlegung der beiden Halbschalen 17 aneinander erfolgt über Verbindungsmittel, indem auf der einen Längsseite am Rand 22 jeder Halbschale 17 im Längsabstand zueinander angeordnete Niethülsen 26 angeformt sind, die in auf der anderen Längsseite im Rand 22 jeder Halbschale im gleichen Längsabstand zueinander angeordnete Löcher 27 passen. Diese Niethülsen 26 sind in den Löchern 27 vernietet.

Die der Stromzuführung zum Kollektor 12 dienenden Bürstenhalter 28 weisen Fixierzapfen 29 auf, die in Durchbrüche 30 der Halbschalen 17 schließend eingreifen. Um den Klemmenschuh 31 jeden Bürstenhalters 28 leicht zugänglich anordnen zu können, sind zwei Randausschnitte 32 vorgesehen, die eine schließende Anlage jeden Klemmenschuhs 31 am Seitenträger 20 erlauben.

Das aus dem Kollektor 12 austretende Ende der Motorwelle 10 ist nach Durchquerung seiner Lagerstelle 15 bei dem dargestellten Ausführungsbeispiel als Schnecke 33 ausgebildet, die in zwei abstandsweise zueinander angeordnete und in der Brücke 21 jeder Halbschale 17 gelagerte Schneckenräder 34 eingreift. Diese Schneckenräder 34 bilden beim vorliegenden Ausführungsbeispiel die im Motorrahmen 16 angeordneten Abtriebsmittel. Jedes Schneckenrad 34 weist zwei Lagerzapfen 35 und 36 auf, die in an die Brücke 21 jeder Halbschale 17 angeformte Lagerkragen 37 eingreifen. Diese Lagerkragen 37 bilden demnach die Lagerstellen für die als Abtriebsmittel fungierenden Schneckenräder 34. Die Zapfen 36 sind zur Drehmitnahme von darin einsteckbaren Werkzeugen, beispielsweise zum Rühren, Kneten od.dgl. hergerichtet, während in den Zapfen 35 Rastfinger angeordnet sind, die sich von einer Löseeinrichtung zur Freigabe der Werkzeuge aufspreizen lassen.

Auf der der Schnecke 33 gegenüberliegenden Seite liegt die Motorwelle 10 an einem Axialdrucklager 38 an. Zur Halterung dieses beispielsweise eine Kunststoffplatte aufweisenden Axialdrucklagers 38 dient in der betreffenden Stirnseite jeder Halbschale 17 eine zentrisch auch im Rand 22 angeordnete Ausnehmung 39, wobei sich beide Ausnehmungen einer jeden Halbschale 17 zu einem einheitlichen Durchbruch für den Haltezapfen des Axialdrucklagers 38 ergänzen.

Um eine seitliche Abstützung des Motorrahmens 16 an einem nicht dargestellten Gehäuse erzielen zu können, sind auf den Längsseiten der Halbschalen 17 Ausschnitte 40 angeordnet, in die ebenso wie in die Randausschnitte 32 Distanzpuffer 41 eingreifen, die auf den Rand 22 des Motorrahmens aufgesetzt sind.

Wie bereits erwähnt, gibt die dargestellte und vorbeschriebene Ausführungsform den Motorrahmen nur beispielsweise wieder und ist keinesfalls allein darauf beschränkt. Es sind vielmehr noch mancherlei Änderungen und andere Ausgestaltungen dieses Motorrahmens denkbar. Beispielsweise kann der Motorrahmen auch in modifizierter Form statt aus einem Blechzuschnitt aus einem Formteil aus isolierendem Werkstoff gebildet sein. Zudem sind alle in der Beschreibung erwähnten und/oder in der Zeichnung dargestellten neuen Merkmale erfindungswesentlich, auch wenn sie in den Ansprüchen nicht ausdrücklich beansprucht sind.

**Bezugszeichenliste:**

| | |
|---|---|
| 10 | Motorwelle |
| 11 | Rotor |
| 12 | Kollektor |
| 13 | Lüfterrad |
| 14 | Kugelbuchse |
| 15 | Kugelkalotte |
| 16 | Motorrahmen |
| 17 | Halbschale |
| 18 | Aussparung |
| 19 | Stator |
| 20 | Seitenträger |
| 21 | Brücke |
| 22 | Rand |
| 23 | Ausnehmung |
| 24 | Vorsprung, an 19 |
| 25 | Seitenlamelle |
| 26 | Niethülse |
| 27 | Loch |
| 28 | Bürstenhalter |
| 29 | Fixierzapfen |
| 30 | Durchbruch |
| 31 | Klemmenschuh |
| 32 | Randausschnitt |
| 33 | Schnecke |
| 34 | Schneckenrad |
| 35 | Lagerzapfen |
| 36 | Lagerzapfen |
| 37 | Lagerkragen |
| 38 | Axialdrucklager |
| 39 | Ausnehmung |
| 40 | Ausschnitt |
| 41 | Distanzpuffer |

**Patentansprüche**

1. Rahmen für Elektromotoren zum Antrieb von insbesondere Haushaltgeräten, wie Rührgeräte, Elektromesser u.dgl., dessen Seitenträger stirnseitig durch Brücken miteinander verbunden sind, die beide der Lagerung der Motorwelle dienen, wobei eine Brücke auch die Abtriebsmittel lagert,

   **dadurch gekennzeichnet,**

   daß der Motorrahmen (16) aus zwei miteinander verbundenen Halbschalen (17) gebildet ist, die in ihrem mittleren Bereich eine Aussparung (18) zum Durchtritt eines Stators (19) eines Rotors (11) mit Kollektor (12) und eines Lüfterrades (13) sowie Lagerstellen (15,37) für Motorwelle (10) und Abtriebsmittel (34) aufweisen.

2. Rahmen nach Anspruch 1, dadurch gekennzeichnet, daß jede Halbschale (17) aus einem Blechzuschnitt napfförmig gepreßt ist und an einem umlaufenden Rand (22) Verbindungsmittel (26,27) aufweist.

3. Rahmen nach Anspruch 1 und/oder 2, dadurch gekennzeichnet, daß die Lagerstellen (15) für die Motorwelle (10) aus im Bereich beider Stirnseiten der Aussparung (18) in die Brücken (21) einwärts geprägten Streifenlamellen (25) mit angeformter Kugelkalotte (15) zur Aufnahme von die Motorwelle (10) lagernden Kugelbuchsen (14) gebildet sind.

4. Rahmen nach einem oder mehreren der vorhergehenden Ansprüche, dadurch gekennzeichnet, daß die Lagerstellen für die Abtriebsmittel (34) von an wenigstens einer Brücke (21) angeformten Lagerkragen (37) gebildet sind.

5. Rahmen nach Anspruch 2, dadurch gekennzeichnet, daß auf der einen Längsseite im Rand (22) jeder Halbschale (17) im Längsabstand zueinander angeordnete Niethülsen (28) angeformt sind, die in auf der anderen Längsseite im Rand (22) jeder Halbschale im gleichen Längsabstand zueinander angeordnete Löcher (27) passen.

6. Rahmen nach einem oder mehreren der vorhergehenden Ansprüche, dadurch gekennzeichnet, daß jede Halbschale (17) gleichgestaltet ist und zwei Halbschalen (17) auf Umschlag zusammengefügt den gehäuseartigen Motorrahmen (16) ergeben.

7. Rahmen nach einem oder mehreren der vorhergehenden Ansprüche, dadurch gekennzeichnet, daß jede Halbschale (17) neben und beiderseits des Kollektors (12) Durchbrüche (30) zur Aufnahme der Fixierzapfen (29) von Bürstenhaltern (28) aufweist.

8. Rahmen nach einem oder mehreren der vorhergehenden Ansprüche, dadurch gekennzeichnet, daß jeweils zwei Randausschnitte (32) neben dem Kollektor (12) angeordnet sind, die den Austritt des Klemmenschuhs (31) jeden Bürstenhalters (28) aus dem Motorrahmen (16) ermöglichen.

9. Rahmen nach einem oder mehreren der vorhergehenden Ansprüche, dadurch gekennzeichnet, daß die Halbschalen (17) auf einer Stirnseite an ihrem Rand (22) eine Ausnehmung (39) aufweisen, die sich im zusammengefügten Zustand der Halbschalen zu einem Durchbruch ergänzt, welcher der Halterung eines die Motorwelle (10) abstützenden Axialdrucklagers (38) dient.

10. Rahmen nach einem oder mehreren der vorhergehenden Ansprüche, dadurch gekennzeichnet, daß der Rand (22) auf den Längsseiten der Halbschalen (17) Ausschnitte (40) zur Fixierung von auf den Rand (22) des Motorrahmens (16) aufgesetzten Distanzpuffern (41) aufweist.

## FIG. 1

## FIG. 2

## FIG. 3

## FIG.5

## FIG. 4

**Europäisches Patentamt**

# EUROPÄISCHER RECHERCHENBERICHT

Nummer der Anmeldung

# EP 90 12 0530

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | GB-A-2 219 144   (JOHNSON ELECTRIC INDUSTRIAL MANUFACTORY)<br>* Seite 1, Zeilen 11 - 19 *<br>* Seite 3, Zeile 4 - Seite 4, Zeile 16; Figuren 1, 2 *<br>– – – | 1,4,7,8 | H 02 K 5/167<br>A 47 J 43/08 |
| A | US-A-4 335 323   (E. R. KEBBON ET AL.)<br>* Spalte 2, Zeile 50 - Spalte 6, Zeile 10; Figur 2 *<br>– – – | 1-3,5-8 | |
| A | GB-A-2 216 814   (JOHNSON ELECTRIC INDUSTRIAL MANUFACTORY)<br>* Seite 2, Zeile 17 - Seite 3, Zeile 16; Figur 1 *<br>– – – | 1 | |
| A | DE-B-2 729 398   (SIEMENS)<br>* Anspruch 1; Figuren 1, 2 *<br>– – – | 1 | |
| A | DE-U-7 723 667   (WIGO)<br>* Seite 1, Absatz 1 - Seite 2, Absatz 2; Figuren 1, 3 *<br>– – – – – | 1 | |

| | | | RECHERCHIERTE SACHGEBIETE (Int. Cl.5) |
|---|---|---|---|
| | | | H 02 K 5/00<br>H 02 K 7/00<br>A 47 J 43/00 |

Der vorliegende Recherchenbericht wurde für alle Patentansprüche erstellt

| Recherchenort | Abschlußdatum der Recherche | Prüfer |
|---|---|---|
| Berlin | 29 Mai 91 | GESSNER E A F |